(19) Europäisches Patentamt
European Patent Office
Office européen des brevets

(11) EP 4 803 791 A1

(12) **EUROPEAN PATENT APPLICATION**
published in accordance with Art. 153(4) EPC

(43) Date of publication:
**09.09.2026 Bulletin 2026/37**

(21) Application number: **25748342.0**

(22) Date of filing: **17.01.2025**

(51) International Patent Classification (IPC):
***F16L 11/08*** *(2006.01)* ***C08K 3/04*** *(2006.01)*
***C08K 5/36*** *(2006.01)* ***C08L 9/02*** *(2006.01)*

(52) Cooperative Patent Classification (CPC):
**C08K 3/04; C08K 5/36; C08L 9/02; F16L 11/08**

(86) International application number:
**PCT/JP2025/001246**

(87) International publication number:
**WO 2025/164346 (07.08.2025 Gazette 2025/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.01.2024 JP 2024012273**

(71) Applicant: **Sumitomo Riko Company Limited**
**Komaki-shi, Aichi 485-8550 (JP)**

(72) Inventor: **NOZUE, Ayami**
**Komaki-shi, Aichi 485-8550 (JP)**

(74) Representative: **Becker, Eberhard**
**Becker Kurig & Partner**
**Patentanwälte mbB**
**Bavariastraße 7**
**80336 München (DE)**

(54) **INDUSTRIAL HOSE**

(57) The present invention provides an industrial hose which is excellent in terms of heat resistance and adhesion between a plated wire layer 4 and an intermediate rubber layer 3. This industrial hose includes a layer structure in which an inner surface rubber layer 1, an organic fiber layer 2, an intermediate rubber layer 3, and a plated wire layer 4 are stacked in this order. The inner surface rubber layer 1 is formed of a rubber composition that contains components (A)-(D). The total content (B + C) of the component (B) and the component (C) is 0.8-2.2 parts by mass with respect to 100 parts by mass of the component (A), and the mass ratio (B/C) of the component (B) to the component (C) is 1.8-18. (A) a rubber component which contains an acrylonitrile butadiene rubber. (B) at least one of a sulfenamide vulcanization accelerator and a thiazole vulcanization accelerator. (C) thiuram vulcanization accelerator. (D) N-phenyl-N-(trichloromethylthio)benzenesulfonamide.

5
4
3
2
1

FIG. 1



Processed by Luminess, 75001 PARIS (FR)

**Description**

Technical Field

The disclosure relates to a hose having a tubular flow path through which fluid flows, particularly an industrial hose. Specifically, the disclosure relates to high pressure hydraulic hoses for industrial machinery such as construction machinery and mining machinery, and various hoses for automobiles.

Related Art

Industrial hoses used in industrial machinery such as construction machinery and mining machinery are provided with reinforcing layers such as a plating wire layer from the viewpoint of pressure resistance. For example, Patent Document 1 discloses an industrial hose including a layer structure in which an inner surface rubber layer forming a tubular flow path through which fluid such as hydraulic oil flows, an organic fiber layer (reinforcing yarn layer), an intermediate rubber layer, a plating wire layer, and an outer surface rubber layer are laminated in this order.

Industrial hoses are required to have heat resistance in order to suppress thermal degradation caused by, for example, the flow of high-temperature fluid (such as hydraulic oil at 100°C or higher). Further, industrial hoses are required to have adhesion between the plating wire layer and the intermediate rubber layer so as to suppress deterioration of pressure resistance caused by loosening of the plating wire layer.

Citation List

Patent Documents

Patent Document 1: Japanese Patent Application Laid-Open (JP-A) No. 2014-185758.

SUMMARY OF INVENTION

Technical Problem

The disclosure has been made in view of such circumstances, and provides an industrial hose having excellent heat resistance and excellent adhesion between the plating wire layer and the intermediate rubber layer.

Solution to Problem

The inventor conducted extensive research to solve the above problems, and surprisingly found that an industrial hose having excellent heat resistance and excellent adhesion between the plating wire layer and the intermediate rubber layer may be obtained by using at least one of a sulfenamide vulcanization accelerator and a thiazole vulcanization accelerator, a thiuram vulcanization accelerator, and N-phenyl-N-(trichloromethylthio)benzenesulfonamide as constituent materials of the inner surface rubber layer and controlling the total content and mass ratio of the vulcanization accelerators within a specific range.

That is, the disclosure has the following [1] to [8] as its gist.

[1] An industrial hose including a layer structure in which an inner surface rubber layer, an organic fiber layer, an intermediate rubber layer, and a plating wire layer are laminated in this order, in which the inner surface rubber layer is composed of a rubber composition containing components (A) to (D), a total content (B+C) of component (B) and component (C) is 0.8 to 2.2 parts by mass relative to 100 parts by mass of component (A), and a mass ratio (B/C) of component (B) to component (C) is 1.8 to 18, where

(A) is a rubber component containing acrylonitrile butadiene rubber,
(B) is at least one of a sulfenamide vulcanization accelerator and a thiazole vulcanization accelerator,
(C) is a thiuram vulcanization accelerator, and
(D) is N-phenyl-N-(trichloromethylthio)benzenesulfonamide.

[2] In the industrial hose according to [1], a mass ratio (B/C) of the component (B) to the component (C) is 2 to 10.
[3] In the industrial hose according to [1] or [2], the component (A) is a rubber component containing acrylonitrile butadiene rubber and butadiene rubber.
[4] In the industrial hose according to any one of [1] to [3], the acrylonitrile butadiene rubber has an acrylonitrile content

of 18 to 35%.

[5] In the industrial hose according to any one of [1] to [4], the rubber composition further contains carbon black, and a content of the carbon black is 80 to 150 parts by mass relative to 100 parts by mass of component (A).

[6] In the industrial hose according to any one of [1] to [5], a content of the component (D) is 0.3 to 1.0 parts by mass relative to 100 parts by mass of component (A).

[7] In the industrial hose according to any one of [1] to [6], the inner surface rubber layer has a thickness of 0.6 to 4.0 mm, and the intermediate rubber layer has a thickness of 0.1 to 1.0 mm.

[8] In the industrial hose according to any one of [1] to [7], the organic fiber layer is a layer formed by braiding yarns composed of at least one of polyamide fiber and polyester fiber, and the plating wire layer is a layer formed by braiding brass plated wire.

Effects of Invention

According to the disclosure, it is possible to provide an industrial hose having excellent heat resistance and excellent adhesion between the plating wire layer and the intermediate rubber layer.

BRIEF DESCRIPTION OF DRAWINGS

[FIG. 1] is a cross-sectional view showing an example of an industrial hose according to an embodiment of the disclosure.

[FIG. 2] is a diagram (graph) showing a reaction force (torque)-time curve obtained in a reaction force (torque) evaluation test of Examples.

[FIG. 3] is an explanatory diagram (plan view) of a test sample used in an adhesion evaluation test of Examples.

[FIG. 4] is an explanatory diagram (cross-sectional view taken along line A-A in FIG. 3) of a test sample used in an adhesion evaluation test of Examples.

DESCRIPTION OF EMBODIMENTS

Next, an embodiment of the disclosure will be described in detail. However, the disclosure is not limited to this embodiment.

An industrial hose according to an embodiment of the disclosure (hereinafter, may be referred to as "the present hose") is an industrial hose including a layer structure in which an inner surface rubber layer, an organic fiber layer, an intermediate rubber layer, and a plating wire layer are laminated in this order and is characterized in that the inner surface rubber layer is a rubber layer formed using a rubber composition containing components (A) to (D).

(A) is a rubber component containing acrylonitrile butadiene rubber.

(B) is at least one of a sulfenamide vulcanization accelerator and a thiazole vulcanization accelerator.

(C) is a thiuram vulcanization accelerator.

(D) is N-phenyl-N-(trichloromethylthio)benzenesulfonamide.

For industrial hoses, heat resistance is an important property from the viewpoint of suppressing thermal degradation of, for example, the inner surface rubber layer that forms a flow path through which high-temperature fluid flows, while interlayer adhesion between the plating wire layer and the intermediate rubber layer is an important property from the viewpoint of suppressing degradation of pressure resistance caused by loosening of the plating wire layer and the like, and it is desirable to achieve both of these properties.

From the viewpoint of the heat resistance, for example, a method may be adopted in which vulcanization is performed using a thiuram vulcanization accelerator as a vulcanization accelerator to form many monosulfide bonds and disulfide bonds, thereby suppressing re-crosslinking during thermal aging to enhance heat resistance. However, such a method is not satisfactory from the viewpoint of adhesion between the plating wire layer and the intermediate rubber layer, and does not achieve both heat resistance and adhesion.

On the other hand, in the case of performing vulcanization using a sulfenamide vulcanization accelerator or the like, although it is satisfactory from the viewpoint of adhesion between the plating wire layer and the intermediate rubber layer, many polysulfide bonds are formed, so re-crosslinking tends to occur during thermal aging, which is not satisfactory from the viewpoint of heat resistance, and does not achieve both heat resistance and adhesion.

As described above, in industrial hoses, heat resistance and adhesion tend to be contradictory properties, and achieving both of these properties is not necessarily easy.

The inventor focused on the behavior of the intermediate rubber layer and the inner surface rubber layer during vulcanization in order to analyze the principle or mechanism by which strong adhesion is developed between the plating wire layer and the intermediate rubber layer in the process of exploring a method capable of achieving both heat resistance and adhesion. As a result of intensive studies from this viewpoint, the inventor recalled that a method of imparting an action of pressing the intermediate rubber layer radially outward to the inner rubber layer by controlling the expansion properties of the inner surface rubber layer during vulcanization is effective for improving the adhesion between the plating wire layer and the intermediate rubber layer.

That is, as a result of various studies, the inventor presumes that in the vulcanization process during the manufacturing process of an industrial hose including a layer structure in which an inner surface rubber layer, an organic fiber layer, an intermediate rubber layer, and a plating wire layer are laminated in this order, a phenomenon occurs in which the intermediate rubber layer droops into the organic fiber layer, and such a phenomenon is a factor that impairs the adhesion between the outer peripheral surface of the intermediate rubber layer and the inner peripheral surface of the plating wire layer. Specifically, for example, in the vulcanization process during the manufacturing process of an industrial hose, a phenomenon occurs in which a part of the intermediate rubber layer droops inward in the hose radial direction into recesses formed on the outer peripheral surface of the organic fiber layer by braiding of yarns (recesses having a depth in the layer thickness direction of the organic fiber layer, for example, recesses formed in gaps between yarns forming openings in the mesh fabric constituting the organic fiber layer) (a phenomenon in which a part of the intermediate rubber layer flows into the recesses). As a result, an action in a direction in which the outer peripheral surface of the intermediate rubber layer and the inner peripheral surface of the plating wire layer are partially separated from each other occurs, and it is presumed that the interlayer adhesion decreases due to, for example, a decrease in the contact area between the outer peripheral surface of the intermediate rubber layer and the inner peripheral surface of the plating wire layer.

Based on such consideration, the inventor proceeded with the development of a method of controlling the expansion properties of the inner surface rubber layer during vulcanization from the viewpoint of suppressing the phenomenon in which the intermediate rubber layer partially droops into the recesses of the organic fiber layer, imparting an action of pressing the intermediate rubber layer outward in the hose radial direction to the inner rubber layer, and further forming many monosulfide bonds and disulfide bonds.

As a result of accumulating various experiments, the inventor found that, as in the present hose, when the inner surface rubber layer is a rubber layer formed using a rubber composition containing components (A) to (D), and the total content (B+C) of component (B) and component (C) is in a specific range of 0.8 to 2.2 parts by mass relative to 100 parts by mass of component (A), and the mass ratio (B/C) of component (B) to component (C) is in a specific range of 1.8 to 18, the vulcanization rate is moderately suppressed, the expansion of the inner surface rubber layer may be suitably controlled, and many monosulfide bonds and disulfide bonds may be formed, thereby achieving both heat resistance and adhesion.

Hereinafter, each layer constituting the present hose will be described in detail.

<<Inner Surface Rubber Layer>>

The inner surface rubber layer is the innermost layer of the present hose and forms a cylindrical flow path through which fluid flows. The inner surface rubber layer is formed from a rubber composition. The rubber composition (hereinafter sometimes referred to as "inner surface rubber composition") contains at least (A) a rubber component containing acrylonitrile butadiene rubber, (B) at least one of a sulfenamide vulcanization accelerator and a thiazole vulcanization accelerator, (C) a thiuram vulcanization accelerator, and (D) N-phenyl-N-(trichloromethylthio)benzenesulfonamide.

<(A) Rubber Component Containing Acrylonitrile Butadiene Rubber>

The content of the rubber component containing acrylonitrile butadiene rubber is not limited to the following, but is preferably 30 to 80 mass%, more preferably 32 to 70 mass%, and even more preferably 35 to 55 mass%, relative to the total amount (100 mass%) of the inner surface rubber composition.

(Acrylonitrile Butadiene Rubber (NBR))

The acrylonitrile butadiene rubber (NBR) is a copolymer of acrylonitrile and butadiene, or a hydrogenated product of a copolymer of acrylonitrile and butadiene. These may be used alone or in combination of two or more types.

The acrylonitrile content (AN content) of NBR is not particularly limited, but from the viewpoint of heat resistance and adhesion, for example, 18 to 35 mass% is preferable, and 18 to 30 mass% is more preferable. The AN content may be measured by the Kjeldahl method in accordance with JIS K6451-2:2016.

The linear expansion coefficient of NBR is preferably, for example, 2 to 2.5[$10^{-4}$/°C] from the viewpoint of adhesion. The linear expansion coefficient is more preferably 2.2 to 2.5[$10^{-4}$/°C], and even more preferably 2.3 to 2.5 [$10^{-4}$/°C]. The linear expansion coefficient is the rate of change in length per unit temperature change, and is measured, for

example, in accordance with JIS K7197:2012, within a predetermined temperature range (>glass transition temperature (Tg)).

The Mooney viscosity of NBR is not particularly limited, but is preferably, for example, 40 to 82, more preferably 48 to 80, and even more preferably 50 to 78.

The Mooney viscosity is measured in accordance with JIS K6300-1:2013, using an L-type rotor, under conditions of a preheating time of 1 minute, a rotor rotation time of 4 minutes, and a test temperature of 100°C.

The inner surface rubber composition contains a rubber component containing NBR as a main component. Specifically, the content of NBR is preferably 60 mass% or more, and more preferably 70 to 100 mass%, relative to the total amount of the rubber component contained in the inner surface rubber composition (total 100 mass%), from the viewpoint of oil resistance. Further, the content of NBR may be appropriately set within the above range, and may be, for example, 80 to 100 mass%, 85 to 95 mass%, or 88 to 92 mass%, relative to the total amount of the rubber component contained in the inner surface rubber composition (total 100 mass%).

(Other Components)

The inner surface rubber composition may contain a rubber component other than acrylonitrile butadiene rubber (NBR) (hereinafter, may be referred to as "other rubber component"). Examples of the other rubber component include, but are not limited to, butadiene rubber (BR), styrene butadiene rubber (SBR), and chloroprene rubber (CR). These may be used alone or in combination of two or more types.

The content of the other rubber component is, for example, 1 to 20 mass% relative to the total amount (100 mass%) of the rubber component (A) contained in the inner surface rubber composition, from the viewpoint of oil resistance and adhesion, and may be 4 to 18 mass%, 6 to 15 mass%, or 8 to 12 mass%.

The linear expansion coefficient of the other rubber component is preferably, for example, 2.0 to 2.5 [$10^{-4}$/°C], from the viewpoint of suitably controlling the expansion of the inner surface rubber layer during vulcanization. The linear expansion coefficient is more preferably 2.1 to 2.5[$10^{-4}$/°C], and even more preferably 2.2 to 2.5[$10^{-4}$/°C]. By setting the linear expansion coefficient of the other rubber component within the above range, there is a tendency that the adhesion between the intermediate rubber layer and the plating wire layer may be further improved. The linear expansion coefficient is the rate of change in length per unit temperature change, and is measured, for example, in accordance with JIS K7197:2012, within a predetermined temperature range (>glass transition temperature (Tg)).

As the other rubber component, butadiene rubber (BR) is preferable. By using NBR and BR in combination, for example, the inner surface rubber layer may be suitably expanded, and there is a tendency that the adhesion between the intermediate rubber layer and the plating wire layer may be further improved, and there is also a tendency that extrusion moldability is improved and productivity may be enhanced.

As BR, various butadiene rubbers conventionally used as hose materials may be appropriately used, and examples include BR with high cis content, BR with low cis content, and BR containing syndiotactic polybutadiene crystals.

The microstructure of BR is not particularly limited, but for example, high cis-butadiene rubber having a cis-1,4 bond content of 90% or more is preferable. The cis-1,4 bond content may be 95% or more, or 96% or more.

The cis-1,4 content may be measured using $^{1}$H-NMR, $^{13}$C-NMR, FT-IR, or the like.

The Mooney viscosity of BR is not particularly limited, but is preferably, for example, 30 to 60, more preferably 30 to 55, and even more preferably 30 to 50.

The Mooney viscosity is measured in accordance with JIS K6300-1:2013, using an L-type rotor, under conditions of a preheating time of 1 minute, a rotor rotation time of 4 minutes, and a test temperature of 100°C.

From the viewpoint of adhesion and oil resistance, the total content of butadiene rubber (BR) and acrylonitrile butadiene rubber (NBR) (BR+NBR) is preferably 80 to 100 mass%, and more preferably 85 to 100 mass%, relative to the total amount (100 mass%) of the rubber component (A) contained in the inner surface rubber composition.

The total content may be appropriately set within the above range, and may be, for example, 90 to 100 mass%, 95 to 100 mass%, or 88 to 95 mass%, 88 to 92 mass%, or the like.

From the viewpoint of adhesion and oil resistance, the mass ratio of butadiene rubber (BR) to acrylonitrile butadiene rubber (NBR) (BR/NBR) is preferably, for example, 0.01 to 10, more preferably 0.03 to 0.4, and even more preferably 0.05 to 0.25.

The content of BR is, for example, 1 to 30 mass% relative to the total amount (100 mass%) of the rubber component (A) contained in the inner surface rubber composition, and may be 4 to 20 mass%, 6 to 15 mass%, 8 to 10 mass%, or the like.

<(B) At least one of sulfenamide vulcanization accelerator and thiazole vulcanization accelerator, and (C) thiuram vulcanization accelerator>

The inner surface rubber composition contains, as vulcanization accelerators, (B) at least one of sulfenamide

vulcanization accelerator and thiazole vulcanization accelerator, and (C) thiuram vulcanization accelerator. It is important that the total content (B+C) of component (B) and component (C) is 0.8 to 2.2 parts by mass relative to 100 parts by mass of component (A), and the mass ratio of component (B) to component (C) (B/C) is 1.8 to 18.

((B) At least one of sulfenamide vulcanization accelerator and thiazole vulcanization accelerator)

Examples of the sulfenamide vulcanization accelerator include N-oxydiethylene-2-benzothiazolylsulfenamide (NOBS), N-cyclohexyl-2-benzothiazolylsulfenamide (CBS), N-t-butyl-2-benzothiazoylsulfenamide (BBS), N,N'-dicyclohexyl-2-benzothiazoylsulfenamide, and the like. These may be used alone or in combination of two or more types.

Examples of the thiazole vulcanization accelerator include dibenzothiazyl disulfide (MBTS), 2-mercaptobenzothiazole (MBT), 2-mercaptobenzothiazole sodium salt (NaMBT), 2-mercaptobenzothiazole zinc salt (ZnMBT), and the like. These may be used alone or in combination of two or more types.

As described above, as component (B), at least one of sulfenamide vulcanization accelerator and thiazole vulcanization accelerator is used. That is, as component (B), sulfenamide vulcanization accelerator alone may be used, or thiazole vulcanization accelerator alone may be used, or both sulfenamide vulcanization accelerator and thiazole vulcanization accelerator may be used.

Among these, from the viewpoint of remarkably performing the effects of the disclosure, a sulfenamide vulcanization accelerator is preferable. That is, an industrial hose is suitable in which the inner surface rubber layer is composed of a rubber composition containing components (A) to (D), component (B) is a sulfenamide vulcanization accelerator, the total content (B+C) of component (B) and component (C) is 0.8 to 2.2 parts by mass relative to 100 parts by mass of component (A), and the mass ratio of component (B) to component (C) (B/C) is 1.8 to 18.
In addition, as the sulfenamide vulcanization accelerator, N-cyclohexyl-2-benzothiazolylsulfenamide is suitable.

((C) Thiuram vulcanization accelerator)

Examples of the thiuram vulcanization accelerator include tetrabenzylthiuram disulfide (TBzTD), tetramethylthiuram monosulfide (TMTM), tetramethylthiuram disulfide (TMTD), tetraethylthiuram disulfide (TETD), tetrabutylthiuram disulfide (TBTD), tetrakis(2-ethylhexyl)thiuram disulfide, dipentamethylenethiuram tetrasulfide (DPTT), dipentamethylenethiuram hexasulfide, and the like. These may be used alone or in combination of two or more types. Among these, tetramethylthiuram monosulfide (TMTM) is suitably used.

(Total content of component (B) and component (C))

From the viewpoint of performing the effects of the disclosure, it is important to control the total content (B+C) of component (B) and component (C) within the range of 0.8 to 2.2 parts by mass relative to 100 parts by mass of component (A). When the total content is outside the above range, expansion of the inner surface rubber layer during vulcanization tends to become insufficient, making it difficult to achieve both adhesion and heat resistance.
The total content of component (B) and component (C) may be appropriately set within the above range, and may be, for example, 1.0 to 2.1 parts by mass or 1.0 to 2.0 parts by mass relative to 100 parts by mass of component (A).

(Mass ratio of component (B) to component (C))

From the viewpoint of performing the effects of the disclosure, it is important to control the mass ratio (B/C) of component (B) to component (C) within the range of 1.8 to 18. When the mass ratio is outside the above range, expansion of the inner surface rubber layer during vulcanization tends to become insufficient, making it difficult to achieve both adhesion and heat resistance. The mass ratio (B/C) of component (B) to component (C) may be appropriately set within the above range, and is, for example, preferably 2 to 12, and more preferably 2 to 10.

The content of component (B) is, for example, preferably 0.4 to 3.0 parts by mass, more preferably 0.6 to 2.5 parts by mass, and even more preferably 0.8 to 2.0 parts by mass relative to 100 parts by mass of component (A).
In addition, the content of component (C) is, for example, preferably 0.1 to 1.2 parts by mass, more preferably 0.2 to 0.8 parts by mass, and even more preferably 0.1 to 0.6 parts by mass relative to 100 parts by mass of component (A).

<(D) N-phenyl-N-(trichloromethylthio)benzenesulfonamide>

The inner surface rubber composition contains (D) N-phenyl-N-(trichloromethylthio)benzenesulfonamide. By using component (D) together with components (B) and (C) in a specific ratio, the vulcanization rate may be moderately suppressed to promote expansion of the inner surface rubber layer, and many monosulfide bonds and disulfide bonds may be formed.

The content of component (D) is not particularly limited, but from the viewpoint of significantly performing the effects of the disclosure, it is preferably 0.3 to 1.0 parts by mass, and more preferably 0.4 to 0.8 parts by mass relative to 100 parts by mass of component (A).

<Other Components>

In the inner surface rubber composition, in addition to the above components (A) to (D), optional materials such as vulcanizing agents including sulfur, vulcanization accelerators other than components (B) and (C), fillers, plasticizers, antioxidants, vulcanization aids, and tackifying resins may be blended as needed within a range that does not inhibit the effects of the disclosure.

(Sulfur)

Examples of sulfur include insoluble sulfur and soluble sulfur. These may be used alone or in combination of two or more types. Examples of insoluble sulfur include polymeric sulfur such as μ-sulfur, π-sulfur, and ω-sulfur. Examples of commercially available products include SANFEL (manufactured by Sanshin Chemical Industry) and SANFEL EX (manufactured by Sanshin Chemical Industry).
In addition, examples of soluble sulfur include sulfur having a cyclic structure such as α-sulfur, β-sulfur, γ-sulfur, and λ-sulfur. Examples of commercially available products include Kinkain fine powder sulfur (manufactured by Tsurumi Chemical Industry Co., Ltd.) and Powdered Sulfur S (manufactured by Hosoi Chemical Industry Co., Ltd.).
Insoluble sulfur is sulfur that exhibits 90 mass% or more insolubility in carbon disulfide. Further, soluble sulfur is sulfur that exhibits 99.5 mass% or more solubility in carbon disulfide.
From the viewpoint of achieving both heat resistance and adhesion, the content of sulfur is, for example, preferably 0.5 to 2.5 parts by mass, more preferably 0.8 to 2.2 parts by mass, and even more preferably 1 to 1.6 parts by mass, relative to 100 parts by mass of component (A). If the content of sulfur is too high, heat resistance tends to become insufficient.

(Filler)

Examples of filler include carbon black, silica, and calcium carbonate. These may be used alone or in combination of two or more types.
The content of filler is not particularly limited, but is, for example, 80 to 180 parts by mass relative to 100 parts by mass of component (A).
Among the above fillers, carbon black is preferable from the viewpoint of improving durability. Examples of carbon black include carbon black of various grades such as SAF grade, ISAF grade, HAF grade, MAF grade, FEF grade, GPF grade, SRF grade, FT grade, and MT grade. These may be used alone or in combination of two or more types.
The average particle diameter of carbon black is not particularly limited, but is, for example, preferably 20 to 130 nm, more preferably 20 to 80 nm, and even more preferably 20 to 70 nm. The average particle diameter of carbon black is a number average particle diameter and is measured by a transmission electron microscope.
The BET specific surface area of carbon black is preferably 10 to 150 $m^2$/g, more preferably 15 to 100 $m^2$/g, and even more preferably 20 to 80 $m^2$/g.
The BET specific surface area of carbon black may be measured, for example, by degassing a sample at 200°C for 15 minutes, and then using a mixed gas ($N_2$: 70%, He: 30%) as an adsorption gas with a BET specific surface area measuring device (manufactured by Microdata Corporation, 4232-II).
The iodine adsorption amount of carbon black is preferably 10 to 150 mg/g, more preferably 10 to 75 mg/g, and even more preferably 20 to 65 mg/g. In addition, the DBP (dibutyl phthalate) absorption amount of carbon black is preferably 20 to 180 mL/100g, more preferably 20 to 150 mL/100g.
The iodine adsorption amount of carbon black is a value measured in accordance with JIS K6217-1:2008 (Method A), and the DBP absorption amount of carbon black is a value measured in accordance with JIS K6217-4:2017.
The content of carbon black is not particularly limited, but is, for example, 80 to 150 parts by mass relative to 100 parts by mass of component (A). Further, the content of carbon black may be appropriately set within the above range, and from the viewpoint of heat resistance, for example, 115 to 150 parts by mass is preferable, and 120 to 150 parts by mass is more preferable.

(Plasticizer)

Examples of the plasticizer include ester plasticizer, aromatic oil, and process oil. These may be used alone or in combination of two or more types.

Examples of the ester plasticizer include dioctyl phthalate and bis[2-(2-butoxyethoxy)ethyl] adipate. Examples of the aromatic oil include Diana Process AC-12, Diana Process AC-460, Diana Process AH-16 (manufactured by Idemitsu Showa Shell Co., Ltd.), JSO Aroma 790 (manufactured by Japan Sun Oil Co., Ltd.), Aromax 1, and Aromax 3 (manufactured by Fuji Kosan Co., Ltd.). Further, examples of the process oil include naphthenic oil and paraffinic oil.

The content of the plasticizer is not particularly limited, but is, for example, 5 to 20 parts by mass, preferably 5 to 18 parts by mass, and more preferably 8 to 15 parts by mass, relative to 100 parts by mass of component (A).

(Antioxidant)

Examples of the antioxidants include carbamate antioxidant, phenylenediamine antioxidant, phenol antioxidant, phenylamine antioxidant, diphenylamine antioxidant, quinoline antioxidant, imidazole antioxidant, and waxes. These may be used alone or in combination of two or more types.

The content of the antioxidant is not particularly limited, but is, for example, 0.5 to 10 parts by mass, preferably 1 to 8 parts by mass, and more preferably 1.5 to 6 parts by mass, relative to 100 parts by mass of component (A).

(Vulcanization aid)

Examples of the vulcanization aids include zinc oxide, zinc white (ZnO), stearic acid, and magnesium oxide. These may be used alone or in combination of two or more types.

The content of the vulcanization aid is not particularly limited, but is, for example, 1 to 12 parts by mass, preferably 2 to 10 parts by mass, and more preferably 3 to 8 parts by mass, relative to 100 parts by mass of component (A).

<Preparation of inner surface rubber composition>

The inner surface rubber composition may be prepared by, for example, appropriately blending the above components (A) to (D) and, as necessary, the above optional components, and kneading these using a kneader such as a kneader, roll, or Banbury mixer.

The inner surface rubber composition preferably has a predetermined reaction force from the viewpoint of enhancing the adhesion between the plating wire layer and the intermediate rubber layer. Specifically, for an unvulcanized sheet-shaped inner surface rubber composition (cylindrical shape with a diameter of 29.0 mm and a thickness of 12.5 mm), the ratio ($T_{30}/T_B$) of the torque after 30 minutes ($T_{30}$) to the bottom torque ($T_B$ (lowest torque)) in the reaction force (torque [MPa])-time [s] curve obtained by measurement under conditions of 5% compression rate, 150°C, and 30 minutes is preferably 1.1 or more, more preferably 1.5 or more, and even more preferably 2 or more. The upper limit is not particularly limited, but is 2.5 or less, 3.0 or less, and the like.

<<Organic fiber layer>>

The organic fiber layer is a layer located on the radially outer side of the inner surface rubber layer in the present hose and is formed on the outer peripheral surface of the inner surface rubber layer. The organic fiber layer is also called an undercoat reinforcing layer and is a layer interposed between the outer peripheral surface of the inner surface rubber layer and the inner peripheral surface of the intermediate rubber layer described later.

The organic fiber layer is formed by threads made of organic fiber, similar to conventional technology. The organic fiber is not particularly limited, and examples include polyester fiber, polyamide fiber, aramid fiber, vinylon fiber, rayon fiber, PBO (polyparaphenylene benzobisoxazole) fiber, polyketone fiber, polyarylate fiber, and the like. Among these, from the viewpoint of heat resistance and strength, polyester fiber and polyamide fiber are preferable, and polyamide fiber is more preferable.

The method for forming the organic fiber layer is not particularly limited, and examples include a braid method in which threads made of organic fiber are braided using a braider, a spiral method in which threads are wound in a spiral shape using a spiral machine, and a method in which a strip-shaped sheet (for example, mesh fabric) obtained by braiding threads made of organic fiber is wound in a spiral shape using a winding machine.

The wire diameter of the threads made of the above organic fiber is not particularly limited, but is, for example, 0.2 to 1.5 mm, and preferably 0.3 to 1.0 mm.

The braiding density of the organic fiber layer is not particularly limited, but is, for example, 20 to 100%, preferably 30 to 90%, and more preferably 45 to 80%.

The braiding density refers to the ratio (%) of the area occupied by threads made of organic fiber to the area of the organic fiber layer, and the braiding density is 100% when the gap between threads is zero. Specifically, for example, it is obtained by the following formula.

Thread width (diameter) [mm] × number of threads / (2 × π × outer diameter of inner surface rubber layer [mm] × cos 0 [rad]) × 100 (in the formula, θ is the braiding angle of threads). (Formula)

<<Intermediate Rubber Layer>>

The intermediate rubber layer is a layer located on the radially outer side of the organic fiber layer in the present hose and is formed on the outer peripheral surface of the organic fiber layer. The intermediate rubber layer is a layer interposed between the outer peripheral surface of the organic fiber layer and the inner peripheral surface of the plating wire layer described later.

The intermediate rubber layer is formed of a rubber composition (hereinafter sometimes referred to as "intermediate rubber composition"). The intermediate rubber composition is the same as in the conventional technology, is not particularly limited, and may be appropriately prepared. The intermediate rubber composition contains, for example, a rubber component, a phenolic resin, a vulcanization accelerator, a vulcanizing agent such as sulfur, a filler, a plasticizer, an antioxidant, a vulcanization aid, and the like.

Examples of the rubber component include natural rubber (NR), styrene butadiene rubber (SBR), acrylonitrile butadiene rubber (NBR), isoprene rubber (IR), butadiene rubber (BR), ethylene propylene diene rubber (EPDM), and the like. These may be used alone or in combination of two or more types. Among these, NBR is preferable when oil resistance is required, and SBR and NR are preferable when abrasion resistance is required.

When NBR is contained as the rubber component, the acrylonitrile content (AN content) of NBR is not particularly limited, but may be, for example, 33 mass% or less, 28 mass% or less, or 18 to 25 mass%.

The content of the rubber component is not limited to the following, but is, for example, preferably 30 to 80 mass%, more preferably 32 to 70 mass%, and even more preferably 35 to 55 mass% with respect to the total amount (100 mass%) of the intermediate rubber composition.

As the phenolic resin, a known phenolic resin may be appropriately used and is not particularly limited, but examples include cashew-modified phenol resins such as cashew-modified phenol novolac resin, oil-modified phenol resins, and the like. These may be used alone or in combination of two or more types.

The content of the phenolic resin is preferably 2 to 15 parts by mass, and particularly preferably 2 to 8 parts by mass with respect to 100 parts by mass of the rubber component.

As the vulcanization accelerator, a known vulcanization accelerator may be appropriately used and is not particularly limited, but examples include 2-(4'-morpholinodithio)benzothiazole, N-oxydiethylene-2-benzothiazolylsulfenamide, and the like.

The intermediate rubber composition may be prepared by appropriately blending the above components and kneading the same using a kneader such as a kneader, roll, or Banbury mixer.

The intermediate rubber composition may contain adhesives such as, for example, cobalt-based adhesives, melamine-based adhesives, and resorcinol-based adhesives. However, from the viewpoint of heat resistance, the content of the adhesive is preferably less than 0.5 mass%, more preferably less than 0.3 mass%, even more preferably less than 0.1 mass%, and particularly preferably 0 mass% with respect to the total amount (100 mass%) of the intermediate rubber composition.

<<Plating Wire Layer>>

The plating wire layer, also referred to as a wire reinforcement layer, is located on the radially outer side of the intermediate rubber layer and is a layer formed on the outer peripheral surface of the intermediate rubber layer.

The plating wire layer is similar to the conventional technology, is not particularly limited, and may be appropriately formed. The plating wire layer is a layer formed from plating wire, and as the plating wire, a steel wire subjected to plating treatment is preferable. Examples of the plating treatment include copper plating, zinc plating, brass (copper-zinc alloy) plating, nickel plating, tin plating, cobalt plating, and the like. Among these, brass (copper-zinc alloy) plating is preferable. The content ratio of copper to zinc (Cu/Zn) in such brass (copper-zinc alloy) plating is not particularly limited, but is, for example, 70/30 to 55/45, and preferably 70/30 to 60/40.

The diameter of the plating wire is usually 0.15 to 1 mm, and preferably 0.2 to 0.8 mm.

The method for forming the plating wire layer is not particularly limited, and known braiding methods may be listed, for example, spiral type, blade type, and the like. Among these, the spiral type is preferable.

<<Outer Surface Rubber Layer>>

The present hose further has an outer surface rubber layer in addition to the above layers. The outer surface rubber layer is a layer located on the radially outer side of the plating wire layer, and is usually the outermost layer of the present hose.

The outer surface rubber layer is formed from a rubber composition (hereinafter sometimes referred to as "outer rubber composition"). The outer rubber composition is similar to the conventional technology, is not particularly limited, and may be appropriately prepared. The outer rubber composition contains, for example, a rubber component, a vulcanization accelerator, a vulcanizing agent such as sulfur, a filler, a plasticizer, an antioxidant, a vulcanization aid, and the like. From the viewpoint of weather resistance, examples of the rubber component include chloroprene rubber (CR), styrene butadiene rubber (SBR), ethylene-propylene-diene rubber (EPDM), a blend rubber of SBR and EPDM, a blend rubber of NBR and EPDM, a blend rubber of NBR and vinyl chloride (PVC), acrylic rubber (ACM), ethylene acrylate rubber (AEM), chlorinated polyethylene (CM), chlorosulfonated polyethylene (CSM), and the like. These may be used alone or in combination of two or more types. Among these, CR is preferable from the viewpoint of weather resistance, cost, and oil resistance.

The content of the rubber component is not limited to the following, but for example, is preferably 30 to 80 mass%, more preferably 32 to 70 mass%, and even more preferably 35 to 55 mass%, relative to the total amount (100 mass%) of the outer rubber composition.

The outer rubber composition may be prepared by appropriately blending the above components and kneading the same using a kneader such as a kneader, a roll, a Banbury mixer, or the like.

<<Layer Structure of the Present Hose, etc.>>

The present hose may be any hose including a layer structure in which an inner surface rubber layer, an organic fiber layer, an intermediate rubber layer, and a plating wire layer are laminated in this order, and may further include, for example, another intermediate rubber layer, another plating wire layer, an outer surface rubber layer, and other layers. Specifically, for example, a hose including at least a first intermediate rubber layer, a second intermediate rubber layer, a first plating wire layer, and a second plating wire layer may be listed. As an example of a preferred embodiment of the present hose, although not limited to the following, for example, a hose having a layer structure (7 layers) of "inner surface rubber layer/organic fiber layer/first intermediate rubber layer/first plating wire layer/second intermediate rubber layer/-second plating wire layer/outer surface rubber layer" may be listed.

Further, as an example of a preferred embodiment of the present hose, although not limited to the following, a hose having a layer structure (9 layers) of "inner surface rubber layer/organic fiber layer/first intermediate rubber layer/first plating wire layer/second intermediate rubber layer/second plating wire layer/third intermediate rubber layer/third plating wire layer/outer surface rubber layer" may be listed.

Furthermore, as an example of a preferred embodiment of the present hose, although not limited to the following, a hose having a layer structure (11 layers) of "inner surface rubber layer/organic fiber layer/first intermediate rubber layer/first plating wire layer/second intermediate rubber layer/second plating wire layer/third intermediate rubber layer/third plating wire layer/fourth intermediate rubber layer/fourth plating wire layer/outer surface rubber layer" may be listed.

The inner diameter of the present hose is not particularly limited, but is usually 5 to 85 mm, and preferably 6 to 80 mm. Further, the outer diameter of the present hose is usually 9 to 100 mm, and preferably 10 to 85 mm.

The thickness of the inner surface rubber layer is not particularly limited, but is, for example, 0.6 to 4.0 mm, and preferably 1.0 to 2.0 mm.

The thickness of the intermediate rubber layer is, for example, 0.1 to 1.0 mm, and preferably 0.2 to 0.6 mm. If the thickness of the intermediate rubber layer is too thick, bulging tends to occur easily, which is not preferable. The above-mentioned bulging refers to a phenomenon in which, at the root portion of the hose connection fitting (the end portion on the side where the hose is inserted), the balance between the escape force of the crimped portion of the inner surface rubber layer and the resistance force of the non-crimped portion is disrupted due to changes in rubber properties caused by heat, resulting in the escape force becoming greater, causing the inner surface rubber layer to peel off from the organic fiber layer, and the inner surface rubber of the peeled portion to thermally flow and rupture.

The ratio of the thickness of the inner surface rubber layer to the thickness of the intermediate rubber layer (thickness of inner surface rubber layer/thickness of intermediate rubber layer) is not particularly limited, but is, for example, 2 to 20, and preferably 3 to 12. When the above ratio is within the above range, the adhesion between the intermediate rubber layer and the plating wire layer may be further improved without the intermediate rubber layer inhibiting the expansion of the inner surface rubber layer during vulcanization.

The thickness of the organic fiber layer is not particularly limited, but is, for example, 0.2 to 1.5 mm, and preferably 0.3 to 0.5 mm.

The thickness of the plating wire layer is not particularly limited, but is, for example, 0.2 to 1.0 mm, and preferably 0.3 to 0.8 mm.

The thickness of the outer surface rubber layer is not particularly limited, but is, for example, 0.5 to 2.5 mm, and preferably 0.8 to 2 mm.

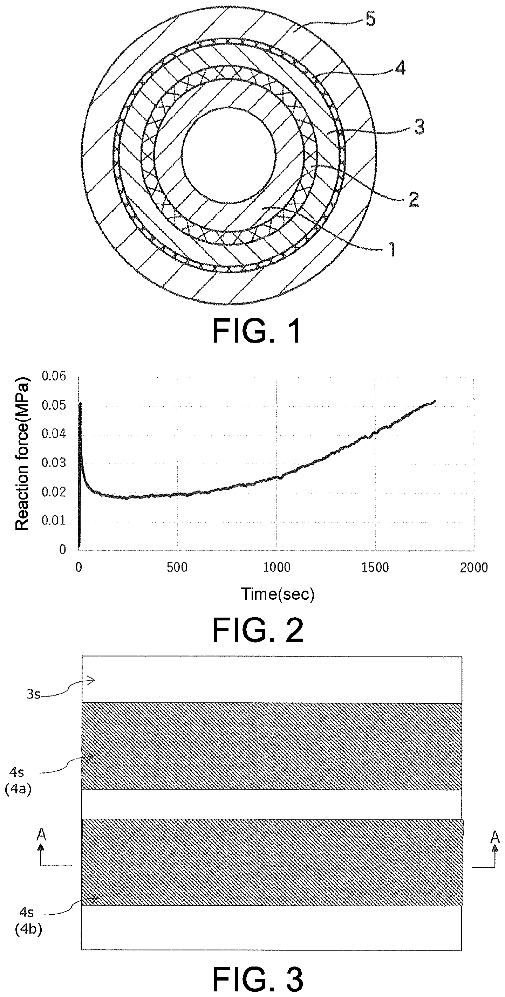

With reference to FIG. 1, one embodiment of the present hose will be described. However, the disclosure is not limited to the structure of FIG. 1. FIG. 1 is a diagram schematically showing a cross-section of a hose having a 5-layer

structure in which an organic fiber layer 2 is formed on the outer peripheral surface of an inner surface rubber layer 1, an intermediate rubber layer 3 is formed on the outer peripheral surface of the organic fiber layer 2, a plating wire layer 4 is formed on the outer peripheral surface of the intermediate rubber layer 3, and an outer surface rubber layer 5 is formed on the outer peripheral surface of the plating wire layer 4.

In the present hose, examples of embodiments having a layer structure in which the intermediate rubber layer 3 and the plating wire layer 4 are alternately repeated include "inner surface rubber layer 1/organic fiber layer 2/intermediate rubber layer 3/plating wire layer 4/intermediate rubber layer 3/plating wire layer 4/outer surface rubber layer 5", "inner surface rubber layer 1/organic fiber layer 2/intermediate rubber layer 3/plating wire layer 4/intermediate rubber layer 3/plating wire layer 4/intermediate rubber layer 3/plating wire layer 4/outer surface rubber layer 5", and the like.

<<Manufacturing Method>>

An example of a manufacturing method of the present hose will be described using one embodiment of the disclosure shown in FIG. 1 as an example. First, using an extrusion molding machine, an inner surface rubber composition is extruded onto a mandrel to form an inner surface rubber layer 1. Then, on the outer peripheral surface of the inner surface rubber layer 1, using a winding machine, a belt-shaped sheet formed by braiding yarn made of organic fiber (for example, yarn made of polyamide fiber) is wound in a spiral manner to form an organic fiber layer 2. Subsequently, an intermediate rubber composition is extruded onto the outer peripheral surface of the organic fiber layer 2 to form an intermediate rubber layer 3,. Then, on the outer peripheral surface of the intermediate rubber layer 3, using a braiding machine, brass plated wire is braided in a spiral manner to form a plating wire layer 4. Then, an outer surface rubber composition is extruded onto the outer peripheral surface of the plating wire layer 4 to form an outer surface rubber layer 5.
Next, on the outer peripheral surface of the outer surface rubber layer 5, using a braiding machine, polyamide canvas is braided in a spiral manner, and after steam vulcanizing this laminate (for example, at 150°C for 60 minutes), the polyamide canvas is removed, whereby a hose having a 5-layer structure may be produced.

<<Application>>

The present hose is used as an industrial hose such as a high pressure hydraulic hose for construction machinery and various hoses for automobiles (for example, oil hoses, fuel hoses, air hoses, water-based hoses, and the like).

Examples

Next, examples will be described together with comparative examples. However, the disclosure is not limited to these examples.

<<Inner Surface Rubber Layer>>

The following were prepared as materials for the rubber composition forming the inner surface rubber layer.

<Component (A): Rubber Component>

- NBR1 (acrylonitrile butadiene rubber, Nipol DN302, manufactured by Zeon Corporation, AN content: 28 mass%, Mooney viscosity: 62.5 ($ML_{1+4}$, 100°C))
- NBR2 (acrylonitrile butadiene rubber, Nipol DN401, manufactured by Zeon Corporation, AN content: 18 mass%, Mooney viscosity: 77.5 ($ML_{2+4}$, 100°C))
- NBR3 (acrylonitrile butadiene rubber, Nipol DN3350, manufactured by Zeon Corporation, AN content: 33 mass%, Mooney viscosity: 50 ($ML_{1+4}$, 100°C))
- BR (butadiene rubber, Ubepol BR-150, manufactured by UBE Industries, Mooney viscosity: 43 ($ML_{1+4}$, 100°C))

<Component (B): Sulfenamide Vulcanization Accelerator, Thiazole Vulcanization Accelerator>

- N-cyclohexyl-2-benzothiazolesulfenamide (Sanceler CM, manufactured by Sanshin Chemical Industry)
- Dibenzothiazyl disulfide (Sanceler DM, manufactured by Sanshin Chemical Industry)

<(C) Thiuram vulcanization accelerator>

- Tetramethylthiuram monosulfide (Sanceler TS, manufactured by Sanshin Chemical Industry)

<(D) N-phenyl-N-(trichloromethylthio)benzenesulfonamide>

Vulkalent E/C, manufactured by Lanxess

<Filler>

- Carbon black (Seast S, manufactured by Tokai Carbon Co., Ltd., nitrogen adsorption specific surface area: 27 $m^2/g$, iodine adsorption amount: 26 mg/g, DBP absorption amount: 68 mL/100g)

<Vulcanizing Agent>

- Sulfur (Kinkain fine powder sulfur, manufactured by Tsurumi Chemical Industry Co., Ltd.)

(Antioxidant)

- Phenylamine antioxidant (2,2,4-trimethyl-1,2-dihydroquinoline, Nonflex RD, manufactured by Seiko Chemical Co., Ltd.)

<Plasticizer>

- Ester plasticizer (dioctyl phthalate (DOP, manufactured by Taoka Chemical Co., Ltd.))

<Processing Aid>

· Stearic acid (Lunac S-70V, manufactured by Kao Corporation)
· Zinc oxide (zinc oxide type 2, manufactured by Sakai Chemical Co., Ltd.)

The above components were blended in the proportions shown in Table 1 and kneaded using a kneader to prepare each unvulcanized inner surface rubber composition.

<<Heat Resistance Evaluation Test>>

Using the inner surface rubber composition obtained above, press vulcanization was performed under conditions of 150°C × 30 minutes to prepare a cylindrical vulcanized rubber sample (diameter 29.0 mm, height 12.5 mm). Using this vulcanized rubber sample, compression set was measured in accordance with JIS K6262:2013 under conditions of temperature 120°C, test time 72 hours, and compression rate 25%, and evaluated according to the following criteria. The results are shown in Table 1.

(Evaluation Criteria)

◎ (excellent): less than 30%
O (good): 30% or more and less than 40%
× (poor): 40% or more

<<Reaction Force (Torque) Evaluation Test>>

Using the inner surface rubber composition obtained above, an unvulcanized cylindrical rubber sheet was prepared (diameter 29.0 mm, thickness 12.5 mm). With compression in the thickness direction (compression rate 5%), heat treatment was performed at 150°C for 30 minutes, and the reaction force (torque) was measured. The ratio ($T_{30}/T_B$) of the torque after 30 minutes ($T_{30}$) to the bottom torque ($T_B$) in the obtained reaction force (torque [MPa])-time curve (see FIG. 2) was determined and evaluated according to the following criteria. This ratio serves as an indicator showing that the inner surface rubber layer expands within a suitable range and contributes to improvement in adhesion.
As a result of the above test, the evaluation of the inner surface rubber composition of Example 2 was "◎" (see FIG. 2).

(Evaluation Criteria)

◎ (excellent): 1.5 or more
o (good): 1.1 or more and less than 1.5
× (poor): less than 1.1

Next, in order to evaluate adhesion, the following test sample was prepared.

<<Method for Preparing Test Sample>>

Using the above inner surface rubber composition, an unvulcanized inner surface rubber sheet 1s (100 mm in length × 100 mm in width, 2.5 mm in thickness) was prepared.
Using a nylon mesh sheet (wire diameter: 0.5 mm, thickness: 0.5 mm, opening (distance between threads): 1.2 mm, opening area (porosity): 50%), a nylon mesh sheet 2s was prepared (100 mm in length × 100 mm in width, 0.5 mm in thickness).
Using the following intermediate rubber composition, an unvulcanized intermediate rubber sheet 3s (100 mm in length × 100 mm in width, 0.40 mm in thickness) was prepared.

(Intermediate Rubber Composition)

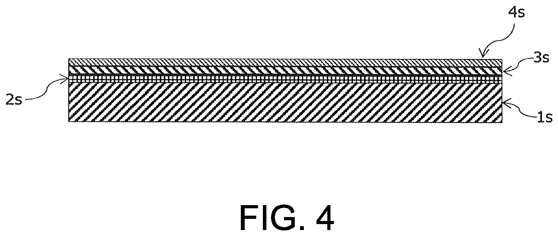

An intermediate rubber composition was prepared by kneading, using a kneader in accordance with a conventional method, 100 parts by mass of NBR (manufactured by Zeon Corporation, Nipol DN401), 8 parts by mass of phenolic resin (manufactured by Sumitomo Bakelite Co., Ltd., Sumilite Resin PR-12686), 1 part by mass of thiazole vulcanization accelerator (manufactured by Ouchi Shinko Chemical Industrial Co., Ltd., Nocceler MDB), 0.5 parts by mass of guanidine vulcanization accelerator (manufactured by Ouchi Shinko Chemical Industrial Co., Ltd., Nocceler D), 0.5 parts by mass of zinc oxide (zinc oxide type 2, manufactured by Mitsui Mining & Smelting Co., Ltd.), 1 part by mass of stearic acid (manufactured by Kao Corporation, Lunac S30), 80 parts by mass of carbon black (manufactured by Tokai Carbon Co., Ltd., Seast SO), 15 parts by mass of plasticizer (manufactured by ADEKA Corporation, Adeka cizer RS-107), and 2 parts by mass of sulfur (manufactured by Karuizawa Refinery).
Using a brass plate (CP2801, thickness 0.25 mm), brass plate pieces 4a and 4b having a substantially rectangular shape in plan view (25 mm in length, 100 mm in width, 2.5 mm in thickness) were prepared.
The nylon mesh sheet 2s was laminated on the inner surface rubber sheet 1s prepared above, the intermediate rubber sheet 3s was laminated on the nylon mesh sheet 2s, and the brass plate pieces 4a and 4b were laminated on the intermediate rubber sheet 3s (see FIG. 3 and FIG. 4) to prepare a test sample. FIG. 4 is a cross-sectional view taken along line A-A of FIG. 3. Further, the test sample is one in which a chuck film (90 cm in length, 30 cm in width) was laminated between the intermediate rubber sheet 3s and the brass plate pieces 4a and 4b so as to perform a peel test described later (the chuck film is not shown in the drawings).

<<Adhesion Evaluation Test>>

The test sample was press-vulcanized under conditions of a surface pressure of 2.0 MPa, 150°C, and 30 minutes. Using the test sample after vulcanization, the adhesion between the intermediate rubber sheet 3s and the brass

plate pieces 4a and 4b was evaluated.

Specifically, the chuck film interposed between the intermediate rubber sheet 3s and the brass plate pieces 4a and 4b was chucked, and a T-type peel test was performed with reference to JIS K6256-1:2013 (peel speed 50 mm/min), and the adhesion between the intermediate rubber layer and the plating wire layer was evaluated based on the adhesion rate of the intermediate rubber sheet 3s to the brass plate pieces 4a and 4b after peeling. A higher adhesion rate indicates better adhesion between the two.

(Evaluation Criteria)

◎ (excellent): The adhesion rate of the intermediate rubber sheet to the brass plate piece is 90% or more
o (good): The adhesion rate of the intermediate rubber sheet to the brass plate piece is less than 90% and 80% or more
× (poor): The adhesion rate of the intermediate rubber sheet to the brass plate piece is less than 80%

[Table 1]

(Part by mass)

| | | (Example 1) | (Example 2) | (Example 3) | (Example 4) | (Example 5) | (Example 6) | (Example 7) | (Example 8) | (Example 9) | (Example 10) | (Example 11) | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|---|---|
| (A) Component | NBR1 | 100 | 100 | 100 | 100 | 100 | 100 | 100 | - | - | 90 | 100 | 100 | 100 | 100 | 100 | 100 | 100 |
| | NBR2 | - | - | - | - | - | - | - | 100 | - | - | - | - | - | - | - | - | - |
| | NBR3 | - | - | - | - | - | - | - | - | 100 | - | - | - | - | - | - | - | - |
| | BR | - | - | - | - | - | - | - | - | - | 10 | - | - | - | - | - | - | - |
| (B) Component | Sulfenamide vulcanization accelerator | 0.8 | 1.5 | 1.8 | 0.8 | 1.8 | 1.5 | 1.5 | 1.5 | 1.5 | 1.5 | - | 1.7 | - | 1.5 | 2.0 | 0.85 | 1.2 |
| | Thiazole vulcanization accelerator | - | - | - | - | - | - | - | - | - | - | 1.5 | - | - | - | - | - | - |
| (C) Component | Thiuram vulcanization accelerator | 0.2 | 0.2 | 0.2 | 0.4 | 0.1 | 0.2 | 0.2 | 0.2 | 0.2 | 0.2 | 0.2 | - | 1.7 | 0.2 | 0.5 | 0.85 | 1.2 |
| (D) Component | N-phenyl-N-(trichloromethylthio) benzenesulfonamide | 0.5 | 0.5 | 0.5 | 0.5 | 0.5 | 0.5 | 0.5 | 0.5 | 0.5 | 0.5 | 0.5 | 0.5 | 0.5 | - | 0.5 | 0.5 | 0.5 |
| Filling material | Carbon black | 130 | 130 | 130 | 130 | 130 | 80 | 150 | 130 | 130 | 130 | 130 | 130 | 130 | 130 | 130 | 130 | 130 |
| Vulcanizing Agent | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Antioxidant | Phenylamine antioxidant | 3 | 3 | 3 | 3 | 3 | 3 | 3 | 3 | 3 | 3 | 3 | 3 | 3 | 3 | 3 | 3 | 3 |
| Plasticizer | Ether ester oil | 10 | 10 | 10 | 10 | 10 | 10 | 10 | 10 | 10 | 10 | 10 | 10 | 10 | 10 | 10 | 10 | 10 |
| Processing Aid | Stearic acid | 1 | 1 | 1 | 1 | 1 | 1 | 1 | 1 | 1 | 1 | 1 | 1 | 1 | 1 | 1 | 1 | 1 |
| | Zinc oxide | 5 | 5 | 5 | 5 | 5 | 5 | 5 | 5 | 5 | 5 | 5 | 5 | 5 | 5 | 5 | 5 | 5 |
| Total mass (B + C) of component (B) and component (C) | | 1 | 1.7 | 2 | 1.2 | 1.9 | 1.7 | 1.7 | 1.7 | 1.7 | 1.7 | 1.7 | 1.7 | 1.7 | 1.7 | 2.5 | 1.7 | 2.4 |
| Mass ratio (B)/(C) of component (B) to component (C) | | 4 | 7.5 | 9 | 2 | 18 | 7.5 | 7.5 | 7.5 | 7.5 | 7.5 | 7.5 | - | - | 7.5 | 4 | 1 | 1 |

(continued)

| (Part by mass) | | | | | | | | | | | | | | | | | | |
|---|---|---|---|---|---|---|---|---|---|---|---|---|---|---|---|---|---|---|
| | | (Example 1) | (Example 2) | (Example 3) | (Example 4) | (Example 5) | (Example 6) | (Example 7) | (Example 8) | (Example 9) | (Example 10) | (Example 11) | Comparative Example 1 | Comparative Example 2 | Comparative Example 3 | Comparative Example 4 | Comparative Example 5 | Comparative Example 6 |
| Evaluation | Heat resistance (120°Cx72h) | ◎ | ◎ | ◎ | ◎ | ○ | ○ | ◎ | ◎ | ○ | ◎ | ○ | X | ◎ | X | ◎ | ○ | ◎ |
| | Adhesion | ○ | ◎ | ◎ | ○ | ○ | ◎ | ○ | ◎ | ○ | ◎ | ○ | ◎ | X | ◎ | X | X | X |

From the results of Table 1 above, it can be understood that an industrial hose in which the inner surface rubber layer is composed of a rubber composition containing component (B) to component (D) together with component (A), the total content (B+C) of component (B) and component (C) is 0.8 to 2.2 parts by mass relative to 100 parts by mass of component (A), and the mass ratio (B/C) of component (B) to component (C) is 1.8 to 18, excels in heat resistance and also excels in adhesion between the plating wire layer and the intermediate rubber layer.

In contrast, as in Comparative Example 1, it can be understood that when the rubber composition forming the inner surface rubber layer does not contain component (C), the heat resistance is insufficient. Further, as in Comparative Example 2, it can be understood that when the rubber composition forming the inner surface rubber layer does not contain component (B), the adhesion is insufficient. Furthermore, as in Comparative Example 3, it can be understood that when the rubber composition forming the inner surface rubber layer does not contain component (D), the heat resistance is insufficient.

Then, as in Comparative Example 4, it can be understood that although the rubber composition forming the inner surface rubber layer contains component (B) to component (D), when the total content (B+C) of component (B) and component (C) is large, the adhesion is insufficient.

Further, as in Comparative Example 5, it can be understood that although the rubber composition forming the inner surface rubber layer contains component (B) to component (D), when the mass ratio (B/C) of component (B) to component (C) is small, the adhesion is insufficient.

Further, as in Comparative Example 6, it can be understood that although the rubber composition forming the inner surface rubber layer contains component (B) to component (D), even when the total content (B+C) of component (B) and component (C) is large and the mass ratio (B/C) of component (B) to component (C) is small, the adhesion is insufficient.

<<Preparation of Hose>>

First, using an extrusion molding machine, the inner surface rubber composition according to the above examples was extruded onto a mandrel to form an inner surface rubber layer. Next, on the outer peripheral surface of this inner surface rubber layer, using a winding machine, a belt-shaped sheet (for example, the above nylon mesh sheet) formed by braiding yarns composed of organic fiber was wound in a spiral manner to form an organic fiber layer. Subsequently, the intermediate rubber composition used in the above test was extruded onto the outer peripheral surface of the above organic fiber layer to form an intermediate rubber layer. Next, on the outer peripheral surface of the intermediate rubber layer, brass plated wire (diameter 0.4 mm) was braided in a spiral manner to form a plating wire layer. This operation was repeated to form inner surface rubber layer/organic fiber layer/intermediate rubber layer/plating wire layer/intermediate rubber layer/plating wire layer/intermediate rubber layer/plating wire layer. Thereafter, the following outer rubber composition was extruded onto the outer peripheral surface of the above plating wire layer to form an outer surface rubber layer. Furthermore, polyamide canvas was wound in a spiral manner on the outer peripheral surface of the outer surface rubber layer. Finally, this laminate was steam vulcanized at 150°C for 60 minutes, and then the above polyamide canvas was removed to prepare a high pressure hydraulic hose (inner diameter: 19 mm) with an 11-layer structure.

(Outer Rubber Composition)

100 parts by mass of CR (manufactured by Denka Company Limited, Denka Chloroprene M-40, non-sulfur modified type), 50 parts by mass of carbon black (manufactured by Tokai Carbon Co., Ltd., Seast SO), 25 parts by mass of calcium carbonate (manufactured by Shiraishi Calcium Kaisha, Ltd., Whiton SB), 20 parts by mass of plasticizer (manufactured by Ajinomoto Co., Inc., rapeseed oil), 1 part by mass of stearic acid (manufactured by Kao Corporation, Lunac S30), 10 parts by mass of zinc oxide (manufactured by Mitsui Mining & Smelting Co., Ltd., zinc oxide type 2), 5 parts by mass of acid acceptor (manufactured by Kyowa Chemical Industry Co., Ltd., Kyowa Mag #150), 5 parts by mass of acid acceptor [$Mg_{4.5}Al_2(OH)_{13}CO_3 \cdot 3.5H_2O$] (manufactured by Kyowa Chemical Industry Co., Ltd., DHT-4A), 1 part by mass of antioxidant (manufactured by Seiko Chemical Co., Ltd., Ozonone 3C), 0.5 parts by mass of vulcanizing agent (manufactured by Sanshin Chemical Industry Co., Ltd., Sanceler 22C), 0.5 parts by mass of vulcanizing agent (manufactured by Ouchi Shinko Chemical Industrial Co., Ltd., Nocrac MB), and 0.5 parts by mass of vulcanization accelerator (manufactured by Sanshin Chemical Industry Co., Ltd., Sanceler TT) were compounded and kneaded with a kneader to prepare the composition.

As the brass plated wire, a brass plated wire manufactured by Tokusen Co., Ltd. (electroplating, plating composition: Cu/Zn = 65/35 mass%, plating adhesion amount: 4 g/kg) was used.

Further, although a nylon mesh sheet is used as the organic fiber layer in the above description, the disclosure is not limited thereto, and the type of organic fiber, numerical values such as opening area (porosity), and the like may be appropriately selected. For example, the opening area (porosity) of the organic fiber layer is preferably 30 to 90%, more preferably 40 to 80%, and even more preferably 40 to 70%.

The opening area (%) is a standard value used in the technical field and is calculated by "$OP^2/(OP + \text{wire diameter})^2$" (OP = distance between yarns).

In the above examples, specific forms of the disclosure have been described, but the above examples are merely illustrative and should not be interpreted in a limited manner. Various modifications apparent to those skilled in the art are intended to be within the scope of the disclosure.

Industrial Applicability

The industrial hose of the disclosure is useful as an industrial hose including a plating wire layer (reinforcing layer), such as high pressure hydraulic hoses for construction machinery, mining machinery, and industrial vehicles (forklifts, automated guided vehicles, and the like), and engine oil hoses for automobiles.

Reference Signs List

1 Inner surface rubber layer
2 Organic fiber layer
3 Intermediate rubber layer
4 Plating wire layer
5 Outer surface rubber layer

**Claims**

**1.** An industrial hose comprising a layer structure in which an inner surface rubber layer, an organic fiber layer, an intermediate rubber layer, and a plating wire layer are laminated in this order, wherein the inner surface rubber layer is composed of a rubber composition containing components (A) to (D), a total content (B+C) of component (B) and component (C) is 0.8 to 2.2 parts by mass relative to 100 parts by mass of component (A), and a mass ratio (B/C) of component (B) to component (C) is 1.8 to 18, where

(A) is a rubber component containing acrylonitrile butadiene rubber,
(B) is at least one of a sulfenamide vulcanization accelerator and a thiazole vulcanization accelerator,
(C) is a thiuram vulcanization accelerator, and
(D) is N-phenyl-N-(trichloromethylthio)benzenesulfonamide.

**2.** The industrial hose according to claim 1, wherein a mass ratio (B/C) of the component (B) to the component (C) is 2 to 10.

**3.** The industrial hose according to claim 1 or 2, wherein the component (A) is a rubber component containing acrylonitrile butadiene rubber and butadiene rubber.

**4.** The industrial hose according to any one of claims 1 to 3, wherein the acrylonitrile butadiene rubber has an acrylonitrile content of 18 to 35%.

**5.** The industrial hose according to any one of claims 1 to 4, wherein the rubber composition further contains carbon black, and a content of the carbon black is 80 to 150 parts by mass relative to 100 parts by mass of component (A).

**6.** The industrial hose according to any one of claims 1 to 5, wherein a content of the component (D) is 0.3 to 1.0 parts by mass relative to 100 parts by mass of component (A).

**7.** The industrial hose according to any one of claims 1 to 6, wherein the inner surface rubber layer has a thickness of 0.6 to 4.0 mm, and the intermediate rubber layer has a thickness of 0.1 to 1.0 mm.

**8.** The industrial hose according to any one of claims 1 to 7, wherein the organic fiber layer is a layer formed by braiding yarns composed of at least one of polyamide fiber and polyester fiber, and the plating wire layer is a layer formed by braiding brass plated wire.

5
4
3
2
1

FIG. 1

Reaction force(MPa)
0.06
0.05
0.04
0.03
0.02
0.01
0
0
500
1000
1500
2000
Time(sec)

FIG. 2

3s
4s
(4a)
A
A
4s
(4b)

FIG. 3

4s
3s
2s
1s

FIG. 4

## INTERNATIONAL SEARCH REPORT

International application No.
**PCT/JP2025/001246**

**A. CLASSIFICATION OF SUBJECT MATTER**

***F16L 11/08***(2006.01)i; ***C08K 3/04***(2006.01)i; ***C08K 5/36***(2006.01)i; ***C08L 9/02***(2006.01)i
FI: F16L11/08 A; C08K5/36; C08L9/02; C08K3/04

According to International Patent Classification (IPC) or to both national classification and IPC

**B. FIELDS SEARCHED**

Minimum documentation searched (classification system followed by classification symbols)

F16L11/08; C08K3/04; C08K5/36; C08L9/02

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2014-185758 A (TOKAI RUBBER INDUSTRIES, LTD.) 02 October 2014 (2014-10-02) paragraphs [0017]-[0064], fig. 1 | 1-8 |
| Y | JP 2023-18578 A (BRIDGESTONE CORPORATION) 08 February 2023 (2023-02-08) claims, paragraphs [0018]-[0071], fig. 1 | 1-8 |

☐ Further documents are listed in the continuation of Box C.    ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 March 2025** | **11 March 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2025/001246**

| Patent document cited in search report | Publication date (day/month/year) | Patent family member(s) | Publication date (day/month/year) |
|---|---|---|---|
| JP 2014-185758 A | 02 October 2014 | WO 2014/156666 A1 | |
| JP 2023-18578 A | 08 February 2023 | US 2024/0317963 A1<br>claims, paragraphs [0029]-[0129], fig. 1<br>WO 2023/008066 A1<br>EP 4378991 A1<br>CN 117715966 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014185758 A